Europäisches Patentamt

European Patent Office

Office européen des brevets

(11) Publication number: **0 284 615 B1**

# EUROPEAN PATENT SPECIFICATION

(45) Date of publication of patent specification: **21.10.92** (51) Int. Cl.⁵: **H01F  13/00, H02M 3/335**

(21) Application number: **87905695.0**

(22) Date of filing: **10.08.87**

(86) International application number:
**PCT/US87/01952**

(87) International publication number:
**WO 88/01791 (10.03.88 88/06)**

(54) **MAGNETIC MATERIAL BIASING METHOD AND APPARATUS.**

(30) Priority: **29.08.86 JP 201901/86**

(43) Date of publication of application:
**05.10.88 Bulletin  88/40**

(45) Publication of the grant of the patent:
**21.10.92 Bulletin  92/43**

(84) Designated Contracting States:
**DE FR GB**

(56) References cited:
**EP-A- 0 026 870**
**CH-A- 374 768**
**US-A- 4 342 075**

(73) Proprietor: **NCR INTERNATIONAL INC.**
**1700 South Patterson Boulevard**
**Dayton, Ohio 45479(US)**

(72) Inventor: **NISHIYAMA, Yoshiaki**
**1113, 5252-1, Tamura Hiratsuka-shi**
**Kanagawa(JP)**
Inventor: **NAKAHASHI, Hidesumi**
**595, Yamanouchi, Kamakura-shi**
**Kanagawa(JP)**

(74) Representative: **Robinson, Robert George**
**International Patent Department NCR Limited**
**206 Marylebone Road**
**London NW1 6LY(GB)**

## Description

Technical Field

The present invention relates to a method of and apparatus for biasing magnetic material. The invention has application for example to electrical devices such as transformers and inductors.

Background Art

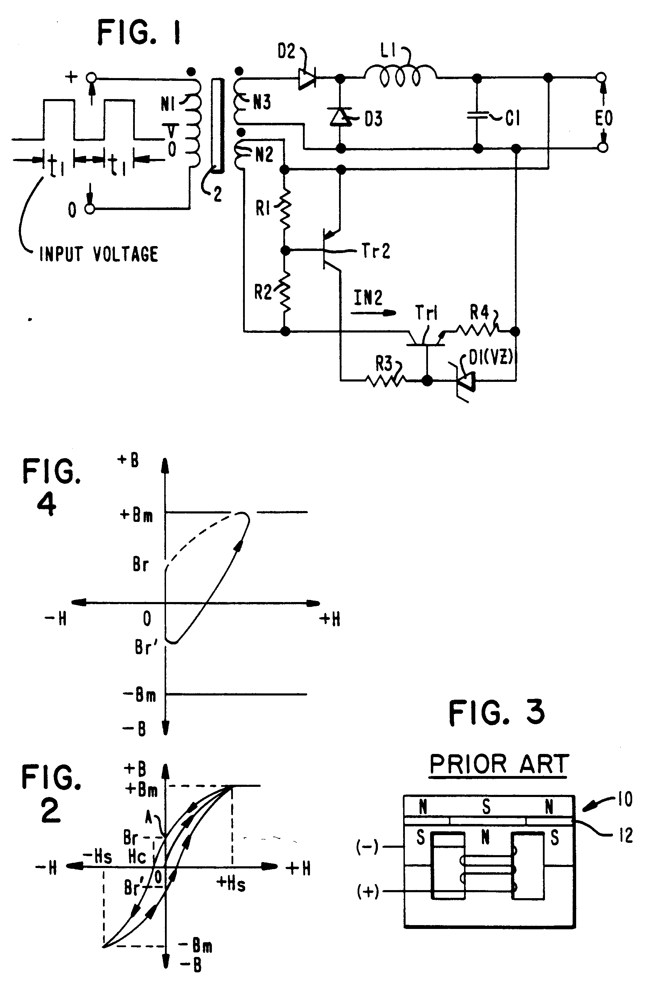

The characteristic of magnetically soft material such as silicon steel, ferrite or the like is as shown by the hysteresis loop and saturation magnetization curve in Fig. 2. In this drawing, B is the magnetic flux density, Bm is the saturation magnetic flux density, Br is the residual magnetic flux density, H is the magnetizing force, Hc is the coercive force and Hs is the saturation magnetizing force. As is apparent from the saturation magnetization curve shown in Fig. 2, even if a magnetizing force H (designated by the product of current in a winding and the number of turns of the winding), which is in excess of a predetermined amount, is provided to the magnetic material, the magnetic flux density B within the magnetic material will not exceed a predetermined amount Bm, due to the magnetic saturation. The value Bm is determined by the property of the material and the configuration of the magnetic material, gaps in a magnetic path and the like. The higher the saturation value Bm is, the more miniaturized can be a transformer, or the more miniaturized can be an inductor which can realize a predetermined inductance value.

In the case where a current flows or a voltage is applied intermittently to one end of a winding wound about a magnetic core, the magnetic material fulfills its function in a range from the saturation magnetic flux density Bm to the residual magnetic flux density Br in Fig. 2.

However, as is apparent from Fig. 2, as a property of magnetic material, the magnetic flux density thereof can vary within a range from + Bm to - Bm. As shown in Fig. 3, a magnetic core 10 with magnetic polarity has been devised based on this fact. The core has a permanent magnet 12 which is inserted into a magnetic path such that the magnetic flux density obtained when the magnetizing force H is "O", that is the residual magnetic flux density Br, exhibits a negative value. Thereby it spreads substantially the usable range of the magnetic flux density. Thus, the combination of the magnetic core with a permanent magnet permits a reduction in utilizing volume of the magnetic material and hence the miniaturization of the apparatus.

However, a biasing method or apparatus which uses a permanent magnet for magnetically biasing magnetic material (such as the magnetic core 10) has the following disadvantages: the apparatus is expensive, the bias level is fixed because the bias is applied by a permanent magnet, and the magnetic property of the permanent magnet deteriorates with long term usage.

From US-A-4342075 there is known a variable leakage transformer having primary and secondary windings and a magnetic core including a main magnetic path and a sub-magnetic path. Leakage of the magnetic flux from the main magnetic path to the sub-magnetic path can be controlled by varying the magnetic flux in the sub-magnetic path, thereby controlling the coupling between the primary and secondary windings so as to control the power transmission from the primary to the secondary winding. In one embodiment of the variable leakage transformer disclosed in this patent, the flux in the sub-magnetic path is controlled by an auxiliary winding associated with a control circuit, the control circuit varying the control current to the auxiliary winding in dependence on the conduction state of a Zener diode. This prior art patent is concerned with controlling power transmission from the primary to secondary winding of a transformer, and is not concerned with the problem of biasing a magnetic core for the purpose of permitting a reduction in utilizing volume of the magnetic material.

Disclosure of the Invention

It is an object of the present invention to provide a method and apparatus for biasing magnetic material in which the above mentioned drawbacks are substantially overcome.

According to one aspect of the invention there is provided a method of magnetically biasing a magnetic core of an electrical device for the purpose of preventing saturation of said core, which device includes a first coil in operative relation to said core, characterized by the following steps of providing a second coil in operative relation to said core and associated operating circuitry for said second coil, said operating circuitry including first and second switching means, and applying a voltage across said first coil to produce a voltage across said second coil, the voltage produced across said second coil serving to operate said first switching means which is contained in an energizing circuit for said second switching means, and the operation of said first switching means serving to operate said second switching means so as to connect a voltage source to said second coil, whereby a magnetic field is generated which acts to prevent saturation of said core.

According to another aspect of the invention there is provided a transformer apparatus including a primary winding having input means associated therewith, a secondary winding having output means associated therewith, a magnetic core operatively associated with said primary and secondary windings, an auxiliary winding operatively associated with said magnetic core and operable to decrease the magnetic flux density of said core, and first switching means having first operating means associated therewith, said first operating means being coupled to said auxiliary winding, characterized by second switching means having associated therewith second operating means which includes said first switching means, said second switching means being operable to connect said output means of said secondary winding to said auxiliary winding, whereby the application of an appropriate voltage to said input means of said primary winding produces voltages across said output means of said secondary winding and across said auxiliary winding, the voltage across said output means being greater than that across said auxiliary winding, and the voltage across said auxiliary winding causing operation of said first switching means, which in turn causes operation of said second switching means to cause said output means to be connected to said auxiliary winding so as to bias the magnetic core to prevent saturation thereof.

It should be understood that a method and apparatus in accordance with the invention each enable the usable range of the magnetic flux density to be spread without use of a special core so as to reduce the utilizing volume of the magnetic material, thereby enabling the miniaturization of the apparatus.

It should further be understood that in a method and apparatus in accordance with the invention, in addition to a conventional magnetic core and main winding, an auxiliary winding is provided which is so constructed as to decrease the magnetic flux which is generated in a magnetic path by the main winding in a predetermined amount in synchronism with an increase in said magnetic flux during the time that said magnetic flux is increasing, to prevent the magnetic saturation of the magnetic material of the magnetic core.

Brief Description of the Drawings

One embodiment of the invention will now be described by way of example with reference to the accompanying drawings, in which:

Fig. 1 is a circuit diagram of a transformer apparatus according to the present invention;

Fig. 2, previously referred to, shows the saturation magnetization curves (B-H magnetization curves) and hysteresis loop of magnetic material;

Fig. 3, previously referred to, is a diagram of a magnetic core arrangement incorporating a permanent magnet; and

Fig. 4 is a diagram showing a change of magnetic flux density within the magnetic core of the apparatus of Fig. 1.

Best Mode for Carrying Out the Invention

Next, the present invention will be described with reference to the accompanying drawings.

Fig. 1 is a circuit diagram according to an embodiment of the present invention which is applied to a transformer. In Fig. 1, when an input voltage with a waveform shown in the drawing is applied across the main winding N1, a voltage corresponding to $n_3/n_1$ of the input voltage in magnitude and having the same waveform as the input voltage is produced between the terminals of a secondary winding N3, where $n_1$ and $n_3$ are the number of turns of the windings N1 and N3 respectively. Numeral 2 denotes a magnetic core. The condition under which the core 2 is not saturated is determined by the following equation (1):

$$n_1 \geq \frac{V \times t1}{A \times \Delta B} \times 10^{10} \quad \cdots\cdots\cdots\cdots (1)$$

where V is the maximum input voltage (volts), t1 is the duration of each positive input voltage pulse applied to the winding N1 (seconds), A is the minimum sectional area in the magnetic path of the core 2 ($mm^2$), and $\Delta B$ is the usable range of the magnetic flux density, that is, Bm - Br (gauss).

3

The equation (1) indicates that the relation between the number of turns $n_1$ of the main winding N1 and the sectional area A in the magnetic path of the core 2 to prevent the core from being saturated is determined by $\Delta B$, that is, a difference between the saturation magnetic flux density Bm and the residual magnetic flux density Br of the core 2, on condition that the input voltage and the duration time t1 of each input voltage pulse are constant. Thus, a large $\Delta B$ can ensure the use of the core 2 with no saturation, even when the number of turns of the main winding is further reduced or the sectional area A in the magnetic path of the core 2 is further decreased. Taking notice of this point, in the magnetic core with magnetic polarity shown in Fig. 3, the magnetic material is biased magnetically to decrease the residual magnetic flux density Br to a negative value with the use of the permanent magnet to increase the value of $\Delta B$. On the other hand, in the present invention, the magnetic material is biased magnetically by a demagnetizing winding (auxiliary winding) N2 which is operative to demagnetise the magnetic flux density through the magnetic material in synchronism with the waveform of the input voltage applied across the main winding N1 to reduce the residual magnetic flux density Br to a negative value.

Next, the operation of the embodiment shown in Fig. 1 will be described.

The windings N3 and N2 are wound about the magnetic core in such manner that during the time that the input voltage is being applied across the main winding N1 (term t1), a voltage, in a direction causing the forward bias of a diode D2 and the reverse bias of a diode D3 connected as shown in Fig. 1, is induced across the output winding N3. Also, a voltage, in a direction to turn on a transistor Tr2, is induced across the auxiliary winding N2. The inductor L1 shown in Fig. 1 is a smoothing inductor.

Now, in response to a positive input voltage pulse applied across the main winding N1, a voltage Eo is developed across a capacitor C1 by the winding N3. Also, a voltage is induced across the auxiliary winding N2, and the emitter-base of the transistor Tr2 is forward biased by resistors R1 and R2 so that the transistor Tr2 is in the "on" state. When the transistor Tr2 is turned on, base current is supplied through a resistor R3 to a transistor Tr1 to turn the transistor Tr1 on and then the voltage Eo is applied to the winding N2. In this case, if the voltage Eo exceeds the value of $v \cdot n_2/n_1$ (where $n_2$ is the number of turns of the auxiliary winding N2), a current $I_{N2}$ flows through the winding N2 in a direction to decrease the exciting current in the winding N1. The magnetizing current $I_{N2}$ is always maintained constant by a circuit arrangement consisting of the transistor Tr1, a resistor R4, and a Zener diode D1 (Zener voltage $V_Z$) as shown in Fig. 1. The relation thereof is expressed by the following equation (2):

$$V_{BE} + I_{N2} \cdot R4 = V_Z ,$$

Therefore,

$$I_{N2} = \frac{V_Z - V_{BE}}{R4} \text{ (constant) } .... (2)$$

($V_{BE}$ is the base-emitter voltage on the transistor Tr1.)

As has been described above, in the present invention, the circuit arrangement in which the Zener diode D1 is used maintains the demagnetizing current $I_{N2}$ constant during the period of time t1, so that the exciting current in the main winding N1 is not affected. That is, the magnetic flux density in the core 2 is demagnetised by the predetermined amount always during the time t1. Supposing that the demagnetized amount is designated by $\Delta B1$, the following equation (3) is established:

$$\Delta B1 = \mu H - \mu \cdot n_2 \cdot I_{N2} \qquad (3)$$

(where $\mu$ is the magnetic permeability of magnetic material)

As is apparent from the above description, the present invention is constructed such that the voltage Eo exceeds the voltage induced by the auxiliary winding N2 and the demagnetizing current $I_{N2}$ is maintained constant by the circuit in which the Zener diode D1 is used, by which the magnetic flux density in the core 2 is demagnetized by the predetermined amount $\Delta B1$ to prevent the magnetic saturation of the core 2.

Next, the time t2 during which no voltage is applied across the winding N1 will be described. The transistor Tr2 is in the off state during the period of time t2, so that the transistor Tr1 is also turned off and hence no current flows through the winding N2. The core 2 is not demagnetised in the absence of the demagnetizing current $I_{N2}$ in the winding N2, so that the magnetic flux density of the core 2 instantaneously increases upon the commencement of the time period t2. However, since no voltage is applied across the

EP 0 284 615 B1

winding N1, even a saturated core 2 causes no problem.

Fig. 4 shows a change in the magnetic flux density in the core 2. The magnetic flux density in the magnetic material is demagnetised by the amount $\mu \cdot n_2 \cdot I_N$ derived from the equation (3) during the time t1, so that the saturation point is substantially raised by the amount corresponding thereto.

The present invention can apply to an inductor in the same manner as it is applied to a transformer with the exception that an external D-C voltage source corresponding to the voltage Eo in Fig. 1 is needed.

As has been described above, according to the present invention, the addition of the auxiliary winding about the magnetic core and the simple circuit makes possible the miniaturization of a magnetic device and a reduction of the number of turns of the main winding. Under given working conditions, the present invention which is applied to a transformer or an inductor realized a reduction of about 30% in volume of the magnetic material as compared to conventional transformers or inductors which use magnetic material that is not biased magnetically.

**Claims**

1. A method of magnetcally biasing a magnetic core (2) of an electrical device for the purpose of preventing saturation of said core, which device includes a first coil (N1) in operative relation to said core, characterized by the steps of providing a second coil (N2) in operative relation to said core (2) and associated operating circuitry for said second coil, said operating circuitry including first (Tr2) and second (Tr1) switching means, and applying a voltage across said first coil to produce a voltage across said second coil, the voltage produced across said second coil serving to operate said first switching means (Tr2) which is contained in an energizing circuit for said second switching means (Tr1), and the operation of said first switching means serving to operate said second switching means so as to connect a voltage source (N3) to said second coil, whereby a magnetic field is generated which acts to prevent saturation of said core (2).

2. A method according to claim 1, characterized in that first (Tr2) and second (Tr1) switching means are transistors.

3. A method according to either claim 1 or claim 2, characterized in that the termination of the application of said voltage across said first coil (N1) causes the non-conduction of said first switching means (Tr2) which in turn causes the non-conduction of said second switching means (Tr1) and interrupts the application of voltage from said voltage source (N3) to said second coil (N2).

4. A method according to any one of the preceding claims, characterized in that said voltage source is formed by a third coil (N3) in operative relation to said core (2).

5. A transformer apparatus including a primary winding (N1) having input means associated therewith, a secondary winding (N3) having output means (C1) associated therewith, a magnetic core (2) operatively associated with said primary and secondary windings, an auxiliary winding (N2) operatively associated with said magnetic core (2) and operable to decrease the magnetic flux density of said core, and first switching means (Tr2) having first operating means (R1, R2) associated therewith, said first operating means being coupled to said auxiliary winding (N2), characterized by second switching means (Tr1) having associated therewith second operating means (R3, D1, Tr2) which includes said first switching means (Tr2), said second switching means being operable to connect said output means of said secondary winding (N3) to said auxiliary winding (N2), whereby the application of an appropriate voltage to said input means of said primary winding (N1) produces voltages across said output means (C1) of said secondary winding (N3) and across said auxiliary winding (N2), the voltage across said output means being greater than that across said auxiliary winding, and the voltage across said auxiliary winding causing operation of said first switching means (Tr2), which in turn causes operation of said second switching means (Tr1) to cause said output means (C1) to be connected to said auxiliary winding so as to bias the magnetic core (2) to prevent saturation thereof.

6. A transformer apparatus according to claim 5, characterized in that said first (Tr2) and second (Tr1) switching means are transistors.

7. A transformer apparatus according to claim 6, characterized in that said second operating means (R3, D1, Tr2) includes a Zener diode (D1) whereby a constant demagnetizing current ($I_{N2}$) is applied to said

5

auxiliary winding (N2) while said appropriate voltage is applied to said input means.

**Patentansprüche**

1. Ein Verfahren zum magnetischen Vorspannen eines Magnetkerns (2) einer elektrischen Vorrichtung, um die Sättigung des Kernes zu verhindern, welche Vorrichtung eine erste Wicklung (N1) in betriebsmäßiger Beziehung zu dem Kern aufweist, gekennzeichnet durch die Schritte Vorsehen einer zweiten Wicklung (N2) in betriebsmäßiger Beziehung zu dem Kern (2) und einer zugeordneten Betriebsschaltung für die zweite Wicklung, wobei die Betriebsschaltung eine erste (Tr2) und zweite (Tr1) Schaltvorrichtung enthält, und Anlegen einer Spannung an die erste Wicklung, um eine Spannung an der zweiten Wicklung zu erzeugen, wobei die über der zweiten Wicklung erzeugte Spannung zum Betrieb der ersten Schaltvorrichtung (Tr2) dient, die in einer Erregungsschaltung für die zweite Schaltvorrichtung (Tr1) enthalten ist, und der Betrieb der ersten Schaltvorrichtung dazu dient, die zweite Schaltvorrichtung derart zu betätigen, daR sie eine Spannungsguelle (N3) mit der zweiten Wicklung verbindet, so daß ein Magnetfeld erzeugt wird, das zur Verhinderung der Sättigung des Kerns (2) wirkt.

2. Verfahren nach Anspruch 1, dadurch gekennzeichnet, daß die erste (Tr2) und zweite (Tr1) Schaltvorrichtung Transistoren sind.

3. Verfahren entweder nach Anspruch 1 oder Anspruch 2, dadurch gekennzeichnet, daß die Beendigung des Anlegens der Spannung über der ersten Wicklung (N1) ein Nichtleiten der ersten Schaltvorrichtung (Tr2) bewirkt, die wiederum ein Nichtleiten der zweiten Schaltvorrichtung (Tr1) bewirkt und das Anlegen der Spannung von der Spannungsguelle (N3) an die zweite Wicklung (N2) unterbricht.

4. Verfahren nach einem der vorhergehenden Ansprüche, dadurch gekennzeichnet, daß die Spannungsguelle durch eine dritte Wicklung (N3) in betriebsmäßiger Beziehung zu dem Kern (2) gebildet wird.

5. Eine Transformatorvorrichtung mit einer Primärwicklung (N1), der eine Eingangsvorrichtung zugeordnet ist, einer Sekundärwicklung (N3), der eine Ausgangsvorrichtung (C1) zugeordnet ist, einem Magnetkern (2), der betriebsmäßig der Primär- und Sekundärwicklung zugeordnet ist, einer Hilfswicklung (N2), die betriebsmäßig dem Magnetkern (2) zugeordnet und aktivierbar ist, um die Magnetflußdichte in dem Kern zu verringern, und einer ersten Schaltvorrichtung (Tr2) mit einer ersten ihr zugeordneten Betriebsvorrichtung (R1, R2), wobei die erste Betriebsvorrichtung mit der Hilfswicklung (N2) gekoppelt ist, gekennzeichnet durch eine zweite Schaltvorrichtung (Tr1), der eine zweite Betriebsvorrichtung (R3, D1, Tr2) zugeordnet ist, die die erste Schaltvorrichtung (Tr2) enthält, wobei die zweite Schaltvorrichtung betätigbar ist, um die Ausgangsvorrichtung der Sekundärwicklung (N3) mit der Hilfswicklung (N2) zu verbinden, wobei das Anlegen einer geeigneten Spannung an die Eingangsvorrichtung der Primärwicklung (N1) Spannungen über der Ausgangsvorrichtung (C1) der Sekundärwicklung (N3) und über der Hilfswicklung (N2) erzeugt, wobei die Spannung über der Ausgangsvorrichtung größer ist als diejenige über der Hilfswicklung, und wobei die Spannung über der Hilfswicklung die Aktivierung der ersten Schaltvorrichtung (Tr2) bewirkt, die wiederum die Aktivierung der zweiten Schaltvorrichtung (Tr1) bewirkt, um zu bewirken, daß die Ausgangsvorrichtung (C1) mit der Hilfswicklung verbunden wird, um den Magnetkern (2) vorzuspannen, damit dessen Sättigung verhindert wird.

6. Eine Transformatorvorrichtung nach Anspruch 5, dadurch gekennzeichnet, daß die erste (Tr2) und zweite (Tr1) Schaltvorrichtung Transistoren sind.

7. Eine Transformatorvorrichtung nach Anspruch 6, dadurch gekennzeichnet, daß die zweite Betriebsvorrichtung (R3, D1, Tr2) eine Zenerdiode (D1) enthält, so daß ein konstanter Demagnetisierungsstrom ($I_{N2}$) an die Hilfswicklung (N2) angelegt wird, während die geeignete Spannung an der Eingangsvorrichtung anliegt.

**Revendications**

1. Procédé pour polariser magnétiquement un noyau magnétique (2) d'un dispositif électrique afin d'empêcher la saturation dudit noyau, lequel dispositif comprend une première bobine (N1) en relation fonctionnelle avec ledit noyau, caractérisé par les étapes qui consistent à utiliser une deuxième bobine (N2) en relation fonctionnelle avec ledit noyau (2) et un circuit associé de commande pour ladite deuxième bobine, ledit circuit de commande comprenant des premier (Tr2) et second (Tr1) moyens de commutation, et à appliquer une tension aux bornes de ladite première bobine pour produire une tension aux bornes de ladite deuxième bobine, la tension produite aux bornes de ladite deuxième bobine servant à commander ledit premier moyen de commutation (Tr2) qui est contenu dans un circuit d'excitation pour ledit second moyen de commutation (Tr1), et la commande dudit premier moyen de commutation servant à commander ledit second moyen de commutation afin de connecter une source de tension (N3) à ladite deuxième bobine, afin qu'un champ magnétique soit généré, lequel agit de façon à empêcher une saturation dudit noyau (2).

2. Procédé selon la revendication 1, caractérisé en ce que lesdits premier (Tr2) et second (Tr1) moyens de commutation sont des transistors.

3. Procédé selon la revendication 1 ou la revendication 2, caractérisé en ce que la fin de l'application de ladite tension aux bornes de ladite première bobine (N1) provoque la non-conduction dudit premier moyen de commutation (Tr2), ce qui, par suite, provoque la nonconduction dudit second moyen de commutation (Tr1) et interrompt l'application d'une tension depuis ladite source de tension (N3) à ladite deuxième bobine (N2).

4. Procédé selon l'une quelconque des revendications précédentes, caractérisé en ce que ladite source de tension est formée par une troisième bobine (N3) en relation fonctionnelle avec ledit noyau (2).

5. Appareil à transformateur comprenant un enroulement primaire (N1) ayant un moyen d'entrée qui lui est associé, un enroulement secondaire (N3) ayant un moyen de sortie (C1) qui lui est associé, un noyau magnétique (2) associé fonctionnellement auxdits enroulements primaire et secondaire, un enroulement auxiliaire (N2) associé fonctionnellement audit noyau magnétique (2) et pouvant être commandé pour diminuer la densité du flux magnétique dudit noyau, et un premier moyen de commutation (Tr2) ayant un premier moyen de commande (R1, R2) qui lui est associé, ledit premier moyen de commande étant couplé audit enroulement auxiliaire (N2), caractérisé par un second moyen de commutation (Tr1) auquel est associé un second moyen de commande (R3, D1, Tr2) qui comprend ledit premier moyen de commutation (Tr2), ledit second moyen de commutation pouvant être commandé de manière à connecter ledit moyen de sortie dudit enroulement secondaire (N3) audit enroulement auxiliaire (N2), afin que l'application d'une tension appropriée audit moyen d'entrée dudit enroulement primaire (N1) produise des tensions aux bornes dudit moyen de sortie (C1) dudit enroulement secondaire (N3) et aux bornes dudit enroulement auxiliaire (N2), la tension aux bornes dudit moyen de sortie étant plus élevée que celle aux bornes dudit enroulement auxiliaire, et la tension aux bornes dudit enroulement auxiliaire provoquant la commande dudit premier moyen de commutation (Tr2), ce qui, à son tour, provoque la commande dudit second moyen de commutation (Tr1) pour amener ledit moyen de sortie (C1) à être connecté audit enroulement auxiliaire afin de polariser le noyau magnétique (2) pour empêcher sa saturation.

6. Appareil à transformateur selon la revendication 5, caractérisé en ce que lesdits premier (Tr2) et second (Tr1) moyens de commutation sont des transistors.

7. Appareil à transformateur selon la revendication 6, caractérisé en ce que ledit second moyen de commande (R3, D1, Tr2) comprend une diode de Zener (D1) afin qu'un courant démagnétisant constant ($I_{N2}$) soit appliqué audit enroulement auxiliaire (N2), tandis que ladite tension appropriée est appliquée audit moyen d'entrée.

# FIG. 1

INPUT VOLTAGE

# FIG. 4

# FIG. 2

# FIG. 3

## PRIOR ART